# EUROPEAN PATENT SPECIFICATION

(11) **EP 2 558 390 B1**
(45) Date of publication and mention of the grant of the patent: **07.09.2016**
(21) Application number: 10714977.5
(22) Date of filing: 12.04.2010
(51) Int. Cl.: H02K 41/035, B65H 54/28, H02K 41/03, H02K 3/26, H02K 3/47, H02K 7/09

(54) **DIRECT TRAVERSE DEVICE**
DIREKTCHANGIERVORRICHTUNG
DISPOSITIF DE VA-ET-VIENT DIRECT

(43) Date of publication of application: 20.02.2013
(73) Proprietor: Agrikli, Mehmet, 34524 Beylikduzu Istanbul (TR)
(72) Inventor: Agrikli, Mehmet, 34524 Beylikduzu Istanbul (TR)
(86) International application number: PCT/TR2010/000079
(87) International publication number: WO 2011/129778

(56) References cited:
- WO-A1-02/098777
- FR-A1- 2 826 644
- GB-A- 2 343 997
- JP-A- 7 137 934
- JP-A- 8 217 332

## Description

### Field of Invention

Present invention relates to a traverse device that may be used on yarn winding machines, as a linear motor and other machines in which traverse mechanisms are useful.

### Background of Invention

While necessary yarn carrying force of a traverse mechanism of a yarn winder should be very low, speed of winding must be very high, uniform and controlled for production considerations, and traverse mechanisms should have quickest return in a short distance for the quality of yarn packages.

The reciprocating motion in high speeds, with a quick return, in short distances complicates the process, requiring excellent control of the speed of such traverse motion.

There are several design aspects that may be considered to be improved of the characteristics of a traverse device to provide a better and faster traverse motion that may be used in mechanisms for winding of yarn on a support element.

Not having turning members and not requiring driving several related members, such linear motors for direct traversing systems also provide significant advantage in terms of force/weight ratio and for long term operation.

Directly and electrically driven traverse devices that may be used for winding yarn onto a support element can be diversified with different aspects.

The first diversification is the type of the moving element or cursor which can be a coil or magnet fixed to on it which the yarn carrying assembly is mounted.

The moving coil type of linear motor requires that coils be moved, whereas the stator is consisting permanent magnets. The cables for powering the coils have to be moving in this design, which is not suitable for long term operation due to the fatigue of the cables that occur by frequent reciprocating motion. Thus, it is obviously more advantageous to use the moving magnet type traverse device for winding yarn onto a support element. Traverse devices with moving magnets not having moving coils and cables are obviously more reliable and advantageous for long term operation.

The second diversification is about' the magnetic forces on the moving element of the traverse device.

Coil and/or magnet and/or core interactions in a traverse device create forces to run the device. In general, these forces have parallel and orthogonal components. While the parallel component is the useful force to move the moving element, the orthogonal component provides attracting force between stator and the moving element. The presence of orthogonal forces requires robust bearing system such as rollers and bearings to overcome the serious attracting forces. These mechanical components obviously increase the weight of the moving element, thus it will consume more energy during traversing and limit the acceleration performance of the system. Thus, it is obviously more advantageous to use the traverse device with balanced orthogonal forces for winding yarn onto a support element.

The third diversification is the shape of the traverse device.

There are known moving magnet traverse devices with cylindrical shape having rod shaped moving element, like piston. In this device, coils are fixed, whereas the rod consisting of permanent magnets is moved. Tubular motors comprise permanent magnets in cylindrical form to be moved reciprocally. Therefore, yarn guides are placed at ends of the cylindrical tube of permanent magnets.

Tubular traverse devices of these kind are however disadvantageous in their use for yarn winding, since the presence of the cylinder actuator and its lateral bulk would prevent the winding heads being placed side by side, as is often the case on textile machines. In addition, even if the moving masses are reduced, they still remain high since the tube magnet or its connected arm must have at least the length of the winding travel plus a sufficient length that remain within the body of the cylinder actuator in order to take the magnetic forces. Thus, it is obviously more advantageous to use the traverse device without a rod shaped moving element.

The fourth diversification is the structure of the cores of the traverse device.

Traverse devices can be constructed as slotted or slotless core types. The slotted types have extensions of the magnetic cores at periodical distances along the length of linear motor. In these types of devices the coils are wound in such a position to magnetize the slots which are interacting with the magnets. Manufacturing of slotted magnetic cores and the windings in these kinds of traverse devices are more complex than slotless type.

Slotless design reduces the total size of the motor considerably, allowing manufacturing more compact motors, reducing complexity of the other parts, providing less complicated manufacturing, having better heat transfer performance through the placement of coils and allowing higher speeds. Slotless design also eliminates the undesired cogging forces and decreases iron losses.

Thus, it is obviously more advantageous to use the traverse device with slotless structure.

The fifth diversification is the driving method of the traverse device.

Since traverse devices used in a yarn winding system need a moving magnet, the stator must consist of coils and magnetic core. Considering the mass of the moving element, which should be as low as possible for energy saving, only the necessary coils should be energized on necessary places during the motion of the moving element. Allocating the energy to different coils will need many electronic components to be employed. Reduction of the number of phases to drive the coils simplifies the allocation process. Thus, it is obviously more advantageous to use the traverse device with two phases.

The sixth diversification is the ratio of the number of moving magnets continuously having force interactions with the coils.

Since in a traverse device magnetic interactions of coil, magnet and core create forces to run the device, in some designs only the particular moving magnets or magnet poles may be under force interactions while the others not at a particular time. To achieve the necessary force to obtain the required speed and acceleration, it is needed to increase the number of magnets or magnet poles, which results increase in size and weight of the moving element. Thus, it is obviously more advantageous the traverse device which all the magnets in moving elements are always in force interaction.

JP 8217332 discloses a device with a magnet which is related to a yarn guide to act, a guide member to guide the magnet to be capable of reciprocation, and magnetic force generating means to generate strong magnetic force of the same pole as a magnetic pole of the magnet on the facing side when the magnet reaches a position as each end part of a traverse section of the yarn guide. It may also be provided with electromagnets to reciprocate the magnet for integrally controlling reciprocation of the magnet by the reciprocation magnets and turning by the magnetic force generating means.

JP 7137934 discloses an arrangement having a stator yoke fixed thereto with a permanent magnet and a center yoke inserted therein with a core (reciprocating runner) which is therefore axially movable and which incorporates a flange attached to a yarn guide receiver, are fixed to a side yoke in parallel with each other. In this arrangement, sensors are provided at positions inside of turn-back ends of the reciprocating stroke of the core so as to detect passing of the core. With this arrangement, when a predetermined time elapses, the core is stopped so as to reverse the running direction of the core. With this arrangement in which the core is surely turned back at the turn-back positions, a yarn can be traversed at a high speed. That is, the time to be set on the timer can be suitably selected.

### Brief Description of Invention

One object of the present invention is to provide a traverse device that may be used on winding machines, as a linear motor, and other machines in which traverse mechanisms are useful, which is more efficient and faster and reliable.

The object aimed is achieved by a traverse device, suitable for particularly winding yarns, comprising a longitudinally extending stator having a ferromagnetic core material provided with coil members; a moving element having permanent magnets forced by the coil members and moved along the longitudinal direction of the stator. The traverse device of the invention is characterized in that a moving element co-axially provided outside the coil members which surround the ferromagnetic core material; each coil member comprising a number of winding units in a manner that the current to flow in clockwise direction while in the next winding of the same phase to flow in counterclockwise; and winding units of each coil member being spaced apart from one another allowing the winding units of the other coil member can be placed within respective spaces.

According to a preferred embodiment of the invention, ferromagnetic core material, coil members and moving element can be of cylindrical, rectangular/square or any polygonal profiled form.

Another embodiment of the traverse device of the invention, comprises a moving element provided between two stators having the coil members which surround the ferromagnetic core material; each coil member comprising a number of winding units in a manner that the current to flow in clockwise direction while in the next winding of the same phase to flow in counterclockwise; and winding units of each coil member being spaced apart from one another allowing the winding units of the other coil member can be placed within respective spaces.

Another embodiment of the traverse device of the invention, comprises a moving element provided between two stators having the coil members which are provided outwardly at least on one side of ferromagnetic core material; each coil member comprising a number of winding units in a manner that the current to flow in clockwise direction while in the next winding of the same phase to flow in counterclockwise; and winding units of each coil member being spaced apart from one another allowing the winding units of the other coil member can be placed within respective spaces.

### Description of Figures

The present invention is to be evaluated together with annexed Figures briefly described hereunder to make clear the subject embodiment and the advantages thereof.

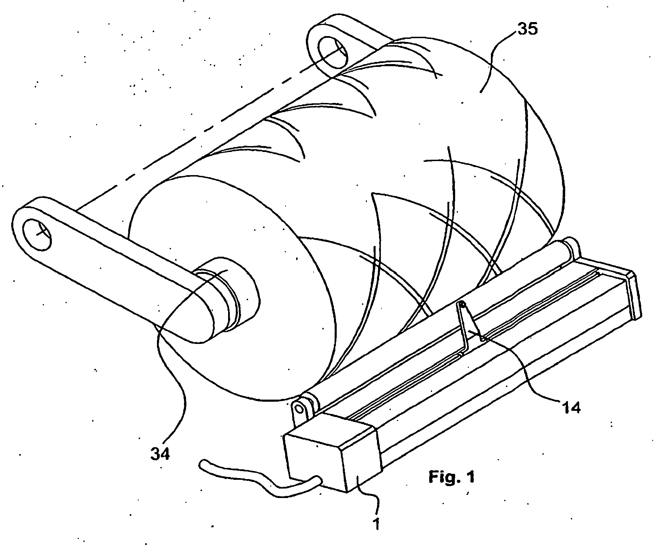

Figure 1 generally shows a representative drawing of the traverse device having a yarn guide to be used for winding yarn onto a support member, like a bobbin which is turned by a drive mechanism
Figure 2 is a perspective drawing of a cylindrical type traverse device showing the consisting elements in sectional views.
Figure 3 is a sectional drawing of cylindrical type traverse device from 3 different sections, showing the locations of the coil members, placement of magnets, direction of their polarities and the path of magnetic flux lines generated from the permanent magnets.
Figure 4 shows the winding construction of coil members for phase A and phase B separately for cylindrical type traverse device.
Figure 5 shows the assembly of the coil members of phase A and phase B for cylindrical type traverse device.
Figure 6 is the perspective drawing of rectangular type traverse device showing the consisting elements in sectional views.
Figure 7 is the sectional drawing of rectangular type traverse device from 3 different sections, showing the locations of the coil members, placement of magnets, direction of their polarities and the path of magnetic flux lines generated from the permanent magnets.
Figure 8 shows the winding construction of coil members for phase A and phase B separately for rectangular type traverse device.
Figure 9 shows the assembly of the coil members of phase A and phase B for rectangular type traverse device.
Figure 10 is the perspective drawing of double-stator and coil surrounding core type traverse device showing the consisting elements in sectional view.
Figure 11a and Figure 11b are the sectional drawings of double-stator and coil surrounding core type traverse device from 3 different sections, showing the locations of the coil members, placement of magnets, direction of their polarities and the path of magnetic flux lines generated from the permanent magnets.
Figure 12 shows the winding construction of coil members for phase A and phase B of left stator separately for double-stator and coil surrounding core type traverse device.
Figure 13 shows the winding construction of coil members for phase A and phase B of right stator separately for double stator and coil surrounding core type traverse device.
Figure 14 shows the assembly of the coil members of phase A and phase B for double-stator and coil surrounding core type traverse device.
Figure 15 is the perspective drawing of double-stator and essentially magnet facing coil type traverse device showing the consisting elements in sectional view.
Figure 16a and Figure 16b are the sectional drawings of double-stator and essentially magnet facing coil type traverse device from 3 different sections, showing the locations of the coil members, placement of magnets, direction of their polarities and the path of magnetic flux lines generated from the permanent magnets.
Figure 17a and Figure 17b show the winding construction of coil members for phase A and phase B of left stator separately and assembled for double-stator and essentially magnet facing coil type traverse device.
Figure 18a and Figure 18b show the winding construction of coil members for phase A and phase B of right stator separately and assembled for double-stator and essentially magnet facing coil type traverse device.
Figure 19 is showing the assembly of the coil members of phase A and phase B for double-stator and essentially magnet facing coil type traverse device.
Figure 20 is the perspective drawing of double-stator and essentially magnet facing coil type traverse device with the extended core showing the consisting elements in sectional view.
Figure 21a and Figure 21b are the sectional drawings of double-stator and essentially magnet facing coil type traverse device with extended core from 3 different sections, showing the locations of the coif members, placement of magnets, direction of their polarities and the path of magnetic flux lines generated from the permanent magnets.
Figure 22 shows the schematic graph of sequence of applying current to Phase A and Phase B of cylindrical and rectangular type traverse device.
Figure 23 shows the schematic flux lines and magnetic poles generated from the coil members at a particular current flow condition in coil members from Figure 22 for cylindrical and rectangular type traverse device.
Figure 24 shows the table of the changing polarities of coils which generate moving magnetic field along axis of coil members at sequential sections from Figure 22 and from Figure 23 for cylindrical and rectangular type traverse device.
Figure 25 shows the schematic graph of sequence of applying current to Phase A and Phase B of double-stator and coil surrounding core type traverse device.
Figure 26 shows the schematic flux lines and magnetic poles generated from the coil members at a particular current flow condition in coil members from Figure 25 for double-stator and coil surrounding core type traverse device.
Figure 27 shows the table of the changing polarities of coils which generate moving magnetic field along axis of coil members at sequential sections from Figure 25 and from Figure 26 for double-stator and coil surrounding core type traverse device.
Figure 28 shows the schematic graph of sequence of applying current to Phase A and Phase B of double-stator and essentially magnet facing coil type traverse device.
Figure 29 shows the schematic flux lines and magnetic poles generated from the coil members at a particular current flow condition in coil members from Figure 28 for double-stator and essentially magnet facing coil type traverse device.
Figure 30 shows the table of the changing polarities of coils which generate moving magnetic field along axis of coil members at sequential sections from Figure 28 and from Figure 29 for double-stator and essentially magnet facing coil type traverse device.
Figure 31 shows the schematics of electronic circuit for splitting the active windings in a coil member to energize as 1, 2, 3, 4, 5, 6, 7, windings at a time by means of unidirectional electronic switching elements such as Mosfets, IGBTs or transistors for a traverse device
Figure 32 shows the schematics of electronic circuit for splitting the active windings in a coil member to energize as 1, 2, 3, 5, 6, 7,... windings at a time by means of bidirectional electronic switching elements such as Triacs or solid state relays for a traverse device.
Figure 33 shows the schematics of electronic circuit for splitting the active windings in a coil member to energize as 2 or 6 windings at a time by means of bidirectional electronic switching elements such as Triacs for a traverse device.
Figure 34 shows the method of position sensing by means of Hall Effect sensor arrays placed inside of the coil members along their axis for cylindrical and rectangular type traverse device.
Figure 35 shows the method of position sensing by means of Hall Effect sensor arrays placed inside of the thin wall member along their axis for double stator type traverse device.
Figure 36 shows the method of position sensing by means of Hall Effect sensor arrays placed outside thin wall members along their axis for cylindrical and rectangular type traverse device.
Figure 37 shows the method of position sensing by means of Hall Effect sensor arrays placed outside thin wall members along their axis for double stator type traverse device.
Figure 38 shows the method of position sensing by means of optical sensor arrays placed outside thin wall members along their axis for cylindrical and rectangular type traverse device.
Figure 39 shows the method of position sensing by means of optical sensor arrays placed outside thin wall members along their axis for double stator type traverse device
Figure 40 shows the traverse device with two spring members and magnets for spring effects on the return points.
Figure 41 shows the front drawing of a traverse device with two spring members and magnets for spring effects on the return points.
Figure 42 a perspective drawing of a cylindrical type traverse device showing the spring effect magnets placed on the ferromagnetic core.
Figure 43 a perspective drawing of a double stator type traverse device showing the spring effect magnets placed on the ferromagnetic core.
Figure 44 shows the alternative way of construction of coils with conductor foil and insulation film.

### Description of Invention

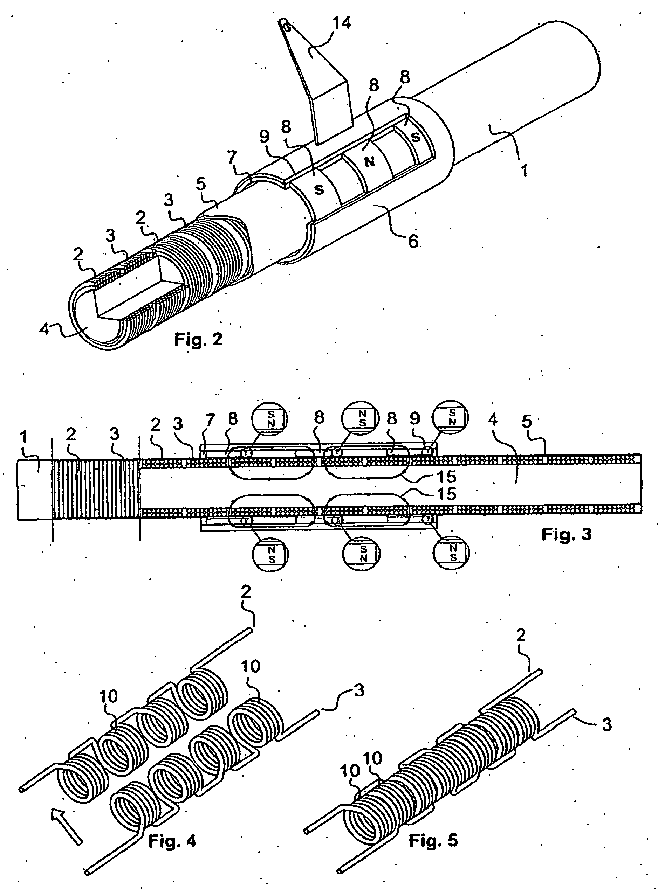

As seen in Figure 2, traverse device (1) comprises coil members (2,3) placed onto a cylindrical ferromagnetic core material (4). A thin wall member (5), preferably made of a non-magnetic material, covers the coil members (2,3) and so core material (4). There is provided a hollow cylindrical moving element (6) onto the wall member (5) the longitudinal axis of which coincides with that of the core material (4). The moving element (6) essentially comprises a bearing element (7) holding a number of permanent magnets (8) and a bushing (9) preferably made of a ferromagnetic material covering the magnets (8). Each ring or arc segment shaped magnet (8) is oppositely poled in radial direction, and radial polarity of each magnet (8) is reversed with respect to the next one along the axis, i.e. if the first magnet is poled N-S radially, the next magnet in axial direction is poled S-N radially. A ring or arc segment multi-poled single magnet can also be used alternatively. The magnets (8) preferably encircle the coil members (2,3) entirely.

Coil members (2,3) encircle the ferromagnetic core material (4) entirely. A yarn guide (14) is provided to the moving element (6) to guide yarns to be wound onto a support members

As seen in Figure 3, the magnetic flux lines (15) of permanent magnets (8) path is encapsulated along magnets (8), coil members (2,3), ferromagnetic core material (4) and bushing (9), which will interact with the magnetic flux lines (13) of energized coil members (2,3). Because of the magnets (8) are provided to encircle the coil members (2,3) or placed symmetrically in radial direction, and the coil members (2,3) are provided to encircle the core material (4), the sum of orthogonal forces applied on the moving element (6), in respect of the axis of the core material (4), will be zero and a magnetically-balanced structure is obtained. As seen in Figure 4, each coil member (2,3) comprises a number of winding units (10) preferably each being serially connected to one another in a manner that while the current flows in clockwise direction in one winding, it flows in counterclockwise direction in the following winding. Each winding unit (10) of each coil member (2,3) is spaced apart from one another, so that the winding units of the other coil member can be placed within respective spaces of the coil member, as seen in Figure 5. It should be appreciated that instead of connecting the winding units (10) serially to have opposite current flows, i.e. clockwise and counterclockwise, in two consecutive winding units (10) can be achieved by providing electrical current to each winding unit independently.

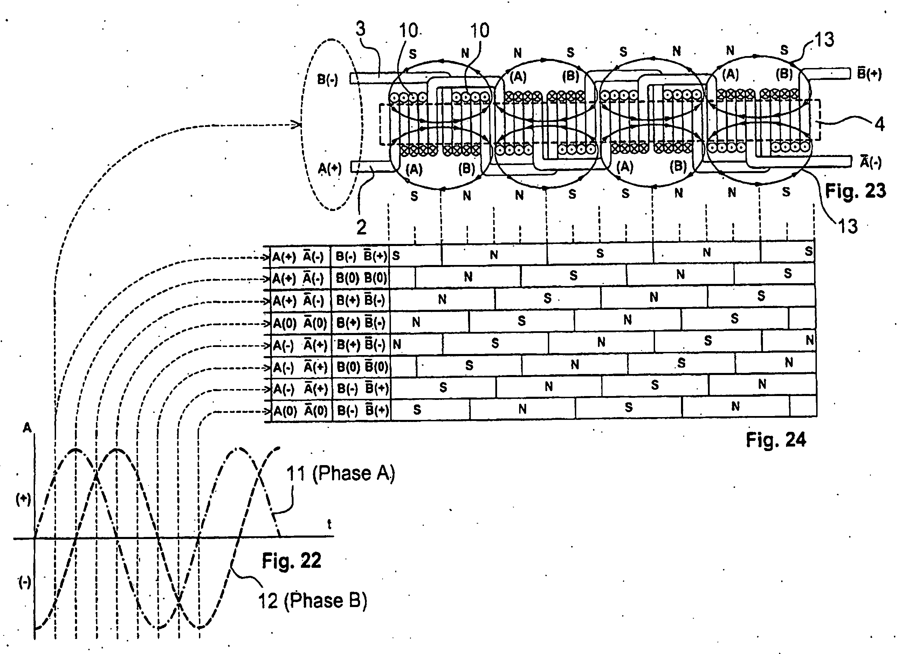

The force required to move the permanent magnets (8) is achieved by moving the magnetic field, which is created by shifting phase of current flow over the coil members (2,3) for a two phase drive configuration: Namely, the first coil member (2) is energized in phase A (11) and the second coil member (3) is energized in phase B (12) such a manner that the current flows alternating with 90 degrees of phase shift. Currents on each coil member (2,3) are shown in Figure 22. The effect of a sample current situation is shown in Figure 23 with the schematic magnetic flux lines (13) on the cross sectional view of the first coil member for phase A (11) and the second coil member for phase B (12). It should be noted that for every different current application to the coil members (11,12) results occurrence of the polarities of magnetic field at different but periodical locations along the axis. In Figure 24 the moving magnetic field is shown as a table with referencing the currents in the said coil members (2, 3) along the sample of the length of the device by. referencing the width of the said coil members (2,3).

This arrangement is also magnetically balanced, as the sum of orthogonal forces applied on the moving element (6), in respect of the axis of the core material (4), will be zero.

While the number of magnets (8) of the moving element (6) can be selected independently, the inventor has surprisingly found that the most effective outcomes are achieved when the magnets (8) with three opposing polarities along the axis. This applies to other embodiments to be detailed below.

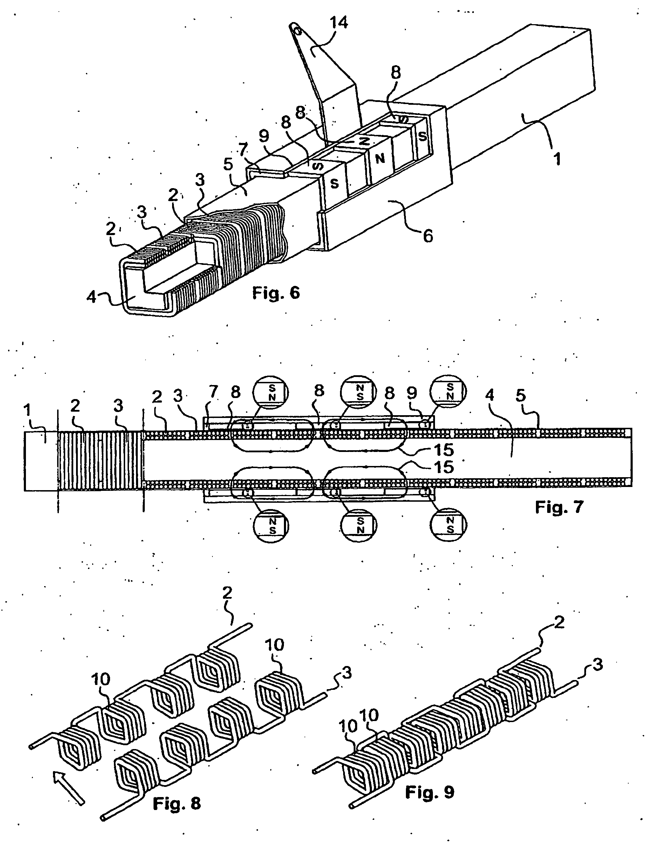

As seen in Figure 6, core material (4), coil members (2,3) and moving element (6) can be of rectangular/square parallelepiped form, other than cylindrical form. It is to be appreciated that these members/elements (2,3,4,6) can be of any polygonal geometric form other than the above specified forms. While the working principle of the alternative traverse device (1) shown in Figures 6-9 is exactly same with that of the above, an advantageous effect of having a prismatic cross-section of these members/elements (2,3,4,6) compared to that of a cylindrical is that moving element (6) is prevented from rotating about its own axis while making reciprocating motion.

Each rectangular prism shaped magnet (8) is oppositely poled from inwards to outwards, and the polarity is reversed with respect to the next one along the axis, i.e. if the first magnet is poled N-S from inwards to outwards, the next magnet in axial direction is poled S-N from inwards to outwards. A flat multi-poled single magnet can also be used alternatively. The magnets (8) are preferably placed all of the sides of the coil members (2,3).

As seen in Figures 8-9, each coil member (2,3) has a form complying with that of the core material (4), and similarly comprises a number of winding units (10) preferably each being serially connected to one another.

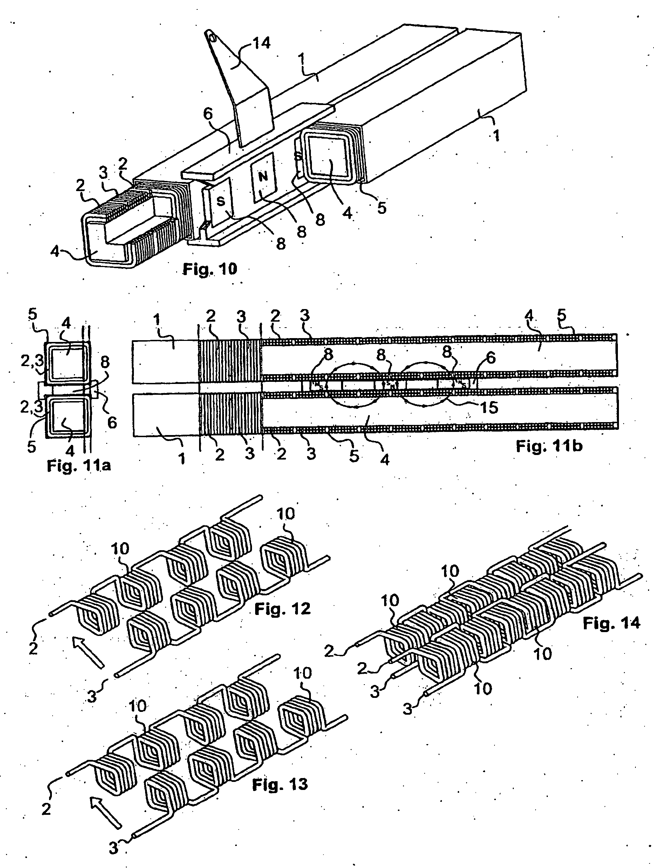

Another embodiment of the traverse device (1) is shown in Figures 10-14. This embodiment is similar to that shown in Figure 6 in that the coil members (2,3) encircle the core material (4) entirely. Difference is that two stators each having a core material (4) with coil members (2,3) are provided to be placed side-by-side longitudinally. A gap is provided between the stators allowing the moving element (6) having magnets (8) to move freely. The winding units (10) of the coil members (2,3) in both of the stators are connected in parallel or in series configuration in a manner that when certain winding units (10) of the first stator are energized, opposite (corresponding) winding units (10) of the second stator are energized simultaneously. In this embodiment, the bearing element (7) carrying the magnets (8) may have an "I-like" profile so that the upper and lower portions thereof can be supported by the upper and lower surfaces of the wall members (5) of each stators. Coil members (2,3) preferably encircle the core materials (4) entirely.

As seen in Figure 11b, the magnetic flux lines (15) of permanent magnets (8) path is encapsulated along magnets (8), coil members (2,3) on both sides and ferromagnetic core material on both sides (4) which will interact with the magnetic flux lines (13) of energized coil members (2,3) for a two phase drive configuration. Because of the identical configuration of the core materials (4) and coil members (2,3), the sum of orthogonal forces applied on the moving element (6) will be zero and a magnetically-balanced structure is obtained.

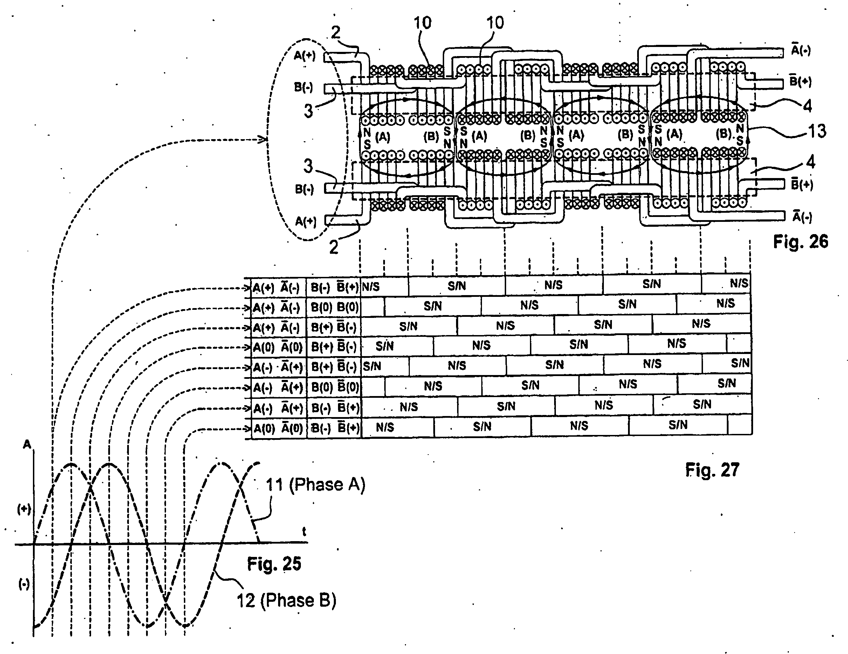

As seen in Figures 12-14, each coil member (2,3) has a form complying with that of the core material (4), i.e. a polygonal form, and similarly comprises a number of winding units (10) preferably each being serially connected to one another. Currents on each coil member (2, 3) are shown in Figure 25. The effect of a sample current situation is shown in Figure 26 with the schematic magnetic flux lines (13) on the cross sectional view of the first coil member(2) of the first stator is energized for phase A (11) and the second coil member(3) of the first stator is energized for phase B (12), and the first coil member(2) of the second stator is energized for phase A (11) and the second coil member(3) of the second stator is energized for phase B (12). In Figure 27 the moving magnetic field is shown as a table with referencing the currents in the said coil members (2, 3) along the sample of the length of the device by referencing the width of the said coil members (2,3).

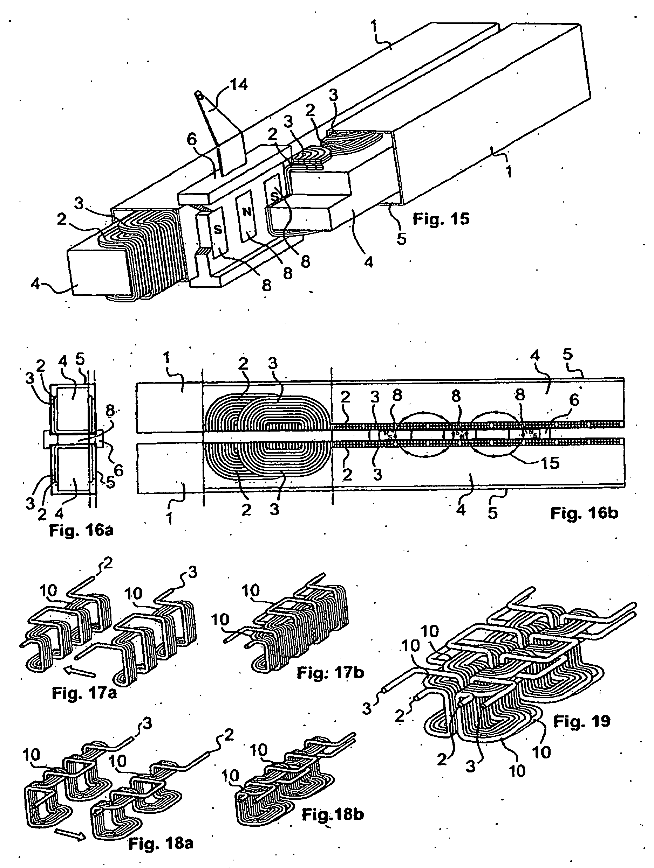

Another embodiment of the traverse device is shown in Figures 15-19. This embodiment is similar to that shown in Figures 10-14. Difference is that coil members (2,3) are provided essentially on the surface of the respective core materials (4) that face to the moving element (6). One advantageous aspect of placing the winding units (10) of the coil members (2,3) to essentially face to the magnets (8) is that the magnetic field created is effectively used to actuate the magnets (8), and not dissipated, which would be otherwise spread to the space where the magnet (8) is not existent.

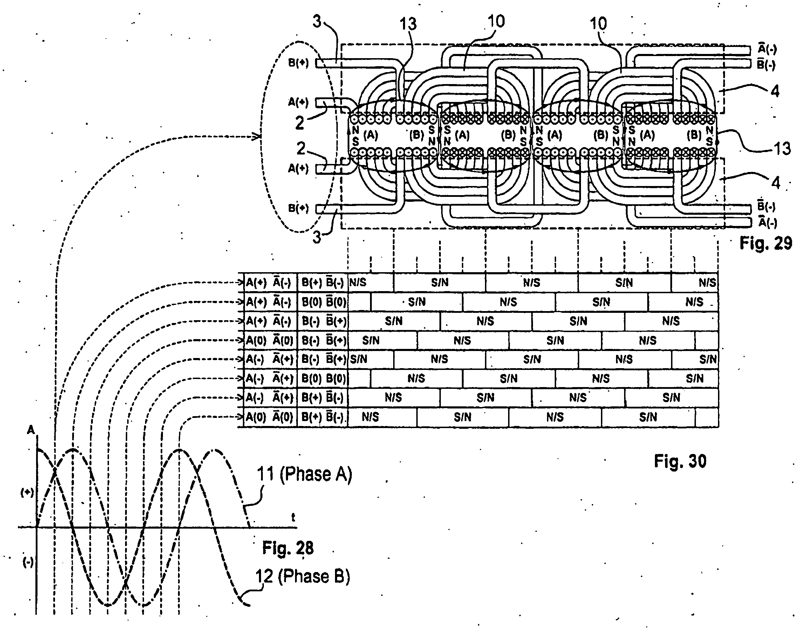

In Figures 17a to 19, coil members (2,3) to be essentially faced to the magnets (8), when mounted to respective core materials (4) are shown. As seen in Figures 17a-19, each coil members (2,3) has a form complying with that of the core material (4), i.e. a polygonal form, and similarly comprises a number of winding units (10) preferably each being serially connected to one another. Currents on each coil member (2, 3) are shown in Figure 28. The effect of a sample current situation is shown in Figure 29 with the schematic magnetic flux lines (13) on the cross sectional view of the first coil member(2) of the first stator is energized for phase A (11) and the second coil member(3) of the first stator is energized for phase B (12), and the first coil member(2) of the second stator is energized for phase A (11) and the second coil member(3) of the second stator is energized for phase B (12). In Figure 30 the moving magnetic field is shown as a table with referencing the currents in the said coil members (2, 3) along the sample of the length of the device by referencing the width of the said coil members (2,3).

As seen in Figure 16b, the magnetic flux lines (15) of permanent magnets (8) path is encapsulated along magnets (8), coil members (2,3) on both sides and ferromagnetic core material on both sides (4) which will interact with the magnetic flux lines (13) of energized coil members (2,3). Because of the identical configuration of the core materials (4) and coil members (2,3), the sum of orthogonal forces applied on the moving element (6) will be zero and magnetically balanced structure is obtained.

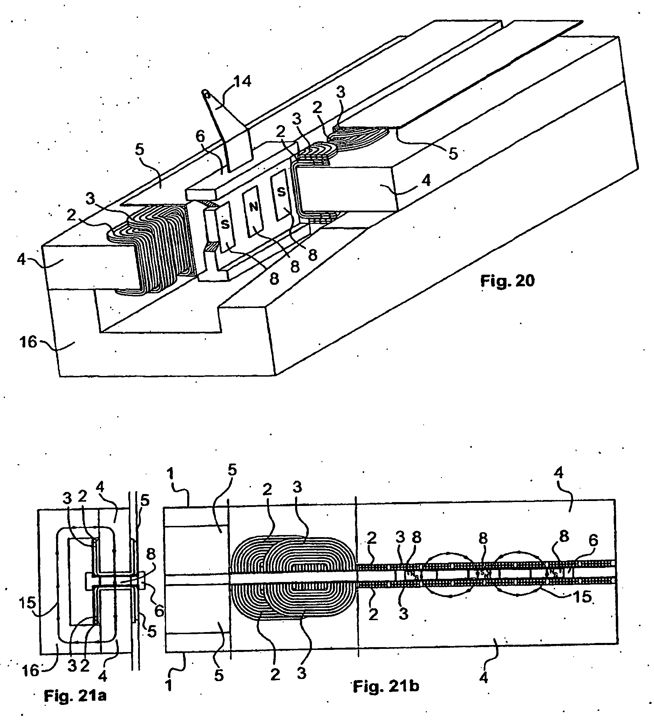

Another embodiment of the traverse device is shown in Figures 20 - 21b. This embodiment is similar to that shown in Figures 15-19. Difference is that the ferromagnetic core materials (4) of both stator are extended to each other or mounted on a ferromagnetic base (16), or connected to each other thereby, which define together a a C-like shape. With this combination, the magnetic flux (13) produced by coil members (2,3) and magnets (8) will be able to flow from one stator to other stator, which increases the flux, and which in turn increases the force on the moving element (6).

The effect of this configuration on flux flow can be seen from Figure 21a.

All embodiments above define magnetically balanced structures in that orthogonal components of forces occurred between the magnets (8) and the coil members (2,3) while the magnets (8) are moved, and allowing parallel components of these forces to remain, which are useful to move the magnets (8) longitudinally. Further, the embodiments above, all comprise slotless type coil members (2,3) with two phase drive configuration, which provides achievement of considerably higher forces to move the magnets (8) without saturating ferromagnetic core (4) magnetically. The number of magnets (8) used in the moving element (6) of all the embodiments above can be of any number, such as single magnet with single or multiple polarities on each side, or multiple magnets with single or multiple polarities on each side.

As the moving element (6) of the traverse device should move along the axis and the coil members (2,3) which are essentially placed as covering the whole path of motion, only the currents flowing in some portion of winding units (10) contribute the linear motion of the moving element (6). This means that useful winding units (10), in this respect, are those, which are just interacting with the moving element (6) at a particular position. Energizing the rest of the winding units (10), which do not contribute to the motion of the moving element (6) would obviously result energy waste.

For this reason, it is necessary to energize a particular winding unit at a time, corresponding to the location of moving element (6) along the motion path, continuously during the motion.

As seen from Figure 22, Figure 25, Figure 28, it is needed to apply different level of currents flowing to any direction of coil members (2,3) at any time to have a continuous motion.

This invention proposes three separate arrangements to control the supplying of energy for winding units (10) and supplying the current to desired direction at desired level to perform the continuous motion of magnets (8).

The first embodiment uses unidirectional electronic switching elements such as mosfets, IGBTs or transistors.

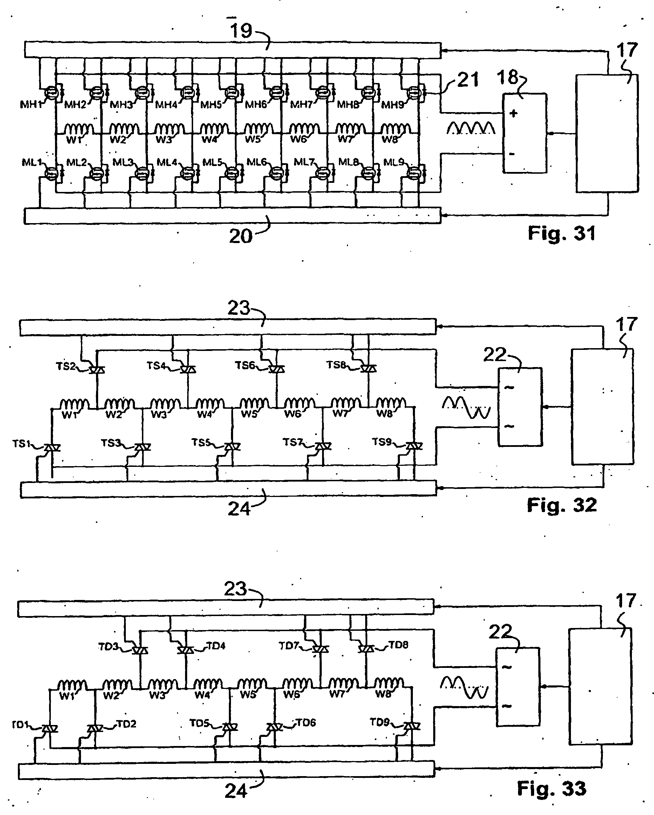

As shown in Figure 31, the winding units (W1,W2,W3,W4,W5,.......) of any coil member (2) or (3) are serially connected as in Figure 4, Figure 8, Figure 12, Figure 13, Figure 17a, Figure 18a.

A controller (17) controls the necessary current level of any phase by means of an adjustable unipolar current controller (18) which may be preferably a PWM controller.

The high side transistors (MH1, MH2, MH3, MH4, MH5,....), being preferably of Mosfet-type, are placed between the series connections of individual winding members ( W1,W2,W3,W4,W5,.......) and the power line connected to the positive terminal of adjustable unipolar current controller (18). The actuation of these transistors (MH1, MH2, MH3, MH4, MH5,....) are performed by the high side transistor driving circuit (19), which is commanded by the same controller (17).Similarly the low side transistors (ML1, ML2, ML3, ML4, ML5,....), being preferably of Mosfet-type, are placed between the series connections of individual winding members (W1,W2,W3,W4,W5.......) and the power line connected to the negative terminal of adjustable unipolar current controller (18). The actuation of these transistors (ML1, ML2, ML3, ML4, ML5,....) are performed by the low side transistor driving circuit (20), which is commanded by the same controller (17).

This embodiment gives the freedom to activate any number of neighboring winding units ( W1,W2,W3,W4,W5......) at a time by activating the required high side transistor (ML1, ML2, ML3, ML4, ML5,....) and activating the required low side transistor (ML1, ML2, ML3, ML4, ML5,....) at a time.

For example, if winding members, say (W5) and (W6), are needed to be energized in such a way that the current is flowing through from winding member (W5) to winding member (W6), the high side transistor (MH5) and the low side transistor (ML7) are activated. Similarly, if the winding members (W5) and (W6) is needed to be energized in such a way that the current is flowing through from winding member (W6) to winding member (W5), i.e. the opposite direction of the above current flow, the high side transistor (MH7) and the low side transistor (ML5) are activated.

Bidirectional electronic switching elements such as Triacs, solid state relays are used for the second embodiment.

As shown in Figure 32, The winding units (W1,W2,W3,W4,W5,.......) of any coil member (2) or (3) are serially connected as in Figure 4, Figure 8, Figure 12, Figure 13, Figure 17a, Figure 18a.

In this embodiment, the controller (17) controls the necessary current level and current direction of any phase by means of an adjustable bipolar current controller (22) which can be preferably an H-Bridge PWM controller.

The bidirectional electronic switching elements (TS1, TS2, TS3, TS4, TS5,....), being preferably of Triac-type, are placed between the series connections of individual winding members (W1, W2, W3, W4, W5.......) and the power lines connected to the terminals adjustable bipolar current controller (22) alternately, as one of them is connected to first line, the second one is connected to second line and the next one is connected to first line again. The actuation of these Triacs (TS1, TS2, TS3, TS4, TS5,...) are performed by Triac driving circuits (23, 24) which are commanded by the same controller (17).

This embodiment gives the freedom to activate any number of neighboring winding units ( W1,W2,W3,W4,W5,.......) at a time by activating the required Triacs (TS1, TS3, TS5...) connected to first power line of adjustable bipolar current controller (22) and activating the required Triacs (TS1, TS3, TS5...) connected to second power line at a time.

This configuration allows energizing the winding members ( W1,W2,W3,W4,W5,.......) as serial connection, if the required number of energized winding unit is odd, such as 1,3,5 etc. This configuration allows energizing the winding members (W1,W2,W3,W4,W5,.......) as parallel, if the required number of energized winding unit is 2.

For example, if only 3 winding members, say (W5), (W6) and (W7), are needed to be energized, the Triac (TS5) connected to the first line and Triac (TS8) connected to the second line are activated. As can be understood from the Figure 32, three of the winding members (W5), (W6) and (W7) are connected in series to the lines connected to the terminals of adjustable bipolar current controller (22) which is supplying the controlled level and direction of the current to the coils.

If, for example, only 2 winding members, say (W5) and (W6), are needed to be energized, the Triacs (TS5) and (TS7) connected to the first line and Triac (TS6) connected to the second line are activated. As can be understood from the Figure 32, both of the winding members (W5), and (W6) are connected in parallel to the lines connected to the terminals of adjustable bipolar current controller (22) which is supplying the controlled level and direction of the current to the said coils. In this case the coil members should be wound such way that allowing the current flows in opposite direction in two adjacent winding units complying the required flux generation.

The third embodiment also uses bidirectional electronic switching elements such as Triacs, solid state relays.

As shown in Figure 33, the winding units ( W1,W2,W3,W4,W5.......) of any coil member (2) or (3) are serially connected as in Figure 4, Figure 8, Figure 12, Figure 13, Figure 17a, Figure 18a.

The controller (17) controls the necessary current level and current direction of any phase by means of the adjustable bipolar current controller (22) which can be preferably an H-Bridge PWM controller.

The bidirectional electronic switching elements (TD1, TD2, TD3, TD4, TD5,....), being preferably of Triac-types, are placed between the series connections of individual winding members (W1, W2, W3, W4, W5......,) and the power lines connected to the terminals adjustable bipolar current controller (22) alternately as two adjacent ones are connected to first line, the two adjacent ones are connected to the second line and the next two adjacent ones are connected to first line again. Actuations of these Triacs (TD1, TD2, TD3, TD4, TD5...) are performed by the Triac driving circuits (23, 24) which are commanded by the same controller (17).

This embodiment gives the possibility to activate the two of the neighboring winding units ( W1,W2,W3,W4,W5.......) at a time by activating the required Triacs (TD1, TD2, TD5...) connected to the first power line of the adjustable bipolar current controller (22) and activating the required Triacs (TD3, TD4, TD7...) connected to the second power line at a time.

This configuration allows energizing the winding members (W1,W2,W3,W4,W5.......) as series connection if the required number of energized winding unit is 2.

For example, if two winding members, say (W5), and (W6), are needed to be energized, Triac (TD5) connected to the first line and Triac (TD7) connected to the second line are activated. As can be understood from the Figure 33, two of the winding members (W5), and (W6) are connected in series to the lines connected to the terminals of adjustable bipolar current controller (22) which is supplying the controlled level and direction of the current to the coils.

Adjustable unipolar and bipolar current controllers (18 and 22) provide the control of the traverse length, and the speed and the position of the moving element (6), which enhances the versatility of the instant traverse device.

A traverse device essentially needs precise position and speed control. Also the commutation of the coil members (2,3) essentially needs the position feedback. For this reason four different position feedback units are proposed with this invention.

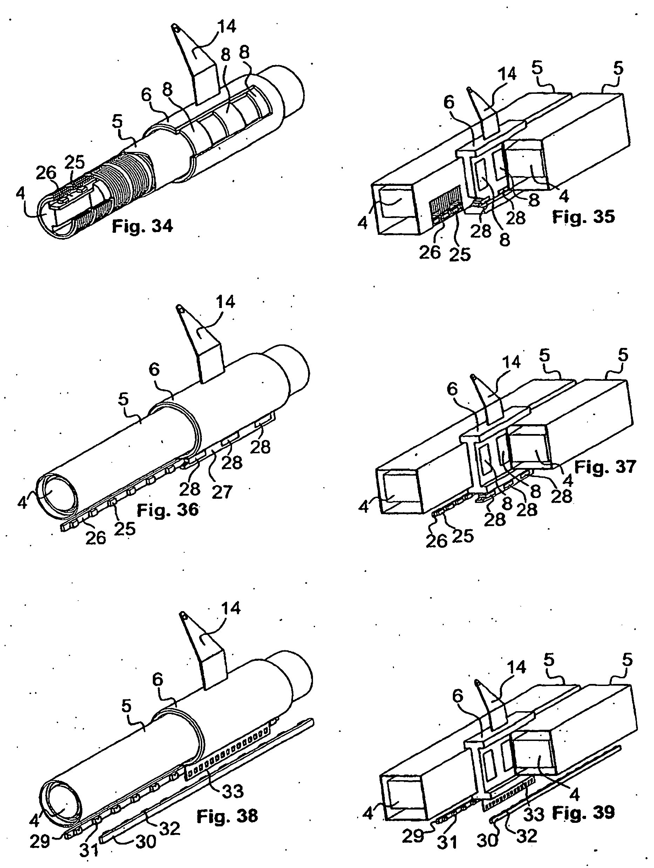

In the first embodiment, as in Figure 34 an electronic board (26) having hall effect sensors (25) are located inside the coil members (2,3) along the axis, as an array. The magnets (8) provided in the moving member (6) will provide the necessary magnetic flux to the hall effect sensors (25) to sense the exact position of the said moving member (6) and produce signals for the controller. The effect of the flux produced by coil members (2,3) will be compensated by appropriate circuitry and/or software of the controller.

In the second embodiment, as in Figure 35 the electronic board (26) consisting hall effect sensors (25) are located inside of the wall member (5) but outside the coil members (2,3) along the axis, as an array. The magnets (8) provided in the moving member (6) or additional position sensing magnets (28) attached to moving element (6) will provide the necessary magnetic flux to the hall effect sensors (25) to sense the exact position of the said moving member (6) and produce signals for the controller. The effect of the flux produced by coil members (2,3) will be compensated by appropriate circuitry and/ or software of the controller.

In the third embodiment, as in Figure 36 and Figure 37 the electronic board (26) consisting hall effect sensor (25) are located outside the wall member (5) along the axis, as an array. Additional position sensing magnets (28) attached to moving element (6) will provide the necessary magnetic flux to the hall effect sensors (25) to sense the exact position of the said moving member and produce signals for the controller. The effect of the flux produced by coil members (2,3) will be compensated by appropriate circuitry and/ or software of the controller.

In the fourth embodiment, as in Figure 38 and Figure 39, the electronic board (29), having light emitting diodes (31) and another electronic board (30) having light sensing elements (32), are located outside the wall member (5) as face by face along the axis, as an array. A light interrupter (33) which has sequential slits attached to moving element (6) will provide the alternating interruption of light a s the function of an encoder to sense the exact position of the moving member and produce signals for the controller. Also, the light sensing elements (32) may be provided as reflective type which also consists of light emitting diodes can be used. In this case the electronic board (29) consisting light emitting leds (31) will not be needed.

Reciprocating motion of a traverse device requires that a moving element continuously accelerate and decelerate along the device. Namely, accelerating from an end towards the middle point of the device, and decelerating from the middle point towards the other end of the device. Such continuous deceleration and acceleration motions of the moving element; in relatively short distances, requires considerable electric current to be applied to the coil members (2,3), which inevitably increases the power consumption. An arrangement which can store the kinetic energy of the moving element (6) during deceleration and give back the stored energy during acceleration would obviously increase the performance of the traverse device (1) and reduces the power consumption.

Such a kinetic energy storage arrangement may be mechanical springs (37) that can be provided at both ends of the traverse device (1), or in more generic terms, the springs (37) are provided at the required reversing points of the moving element (6). The springs (37) are supported by stationary elements (36) at their ends. In use, the moving element (6) will hit to the spring (37) at the required position of turning point, providing the spring member (37) to absorb the kinetic energy of the moving element (6) as a potential energy. As soon as the moving element (6) stops its motion due to the spring's (37) reaction, the spring (37) will give its stored energy to the moving element (6) in the opposite direction. Therefore, the moving element (6) will move back without major loss of its kinetic energy. Position of the springs (37) may be displaced on the traverse device (1) or the length of the springs (37) may be increased or decreased manually or automatically by a proper drive mechanism in compliance with the length of the stroke of the moving element (6).

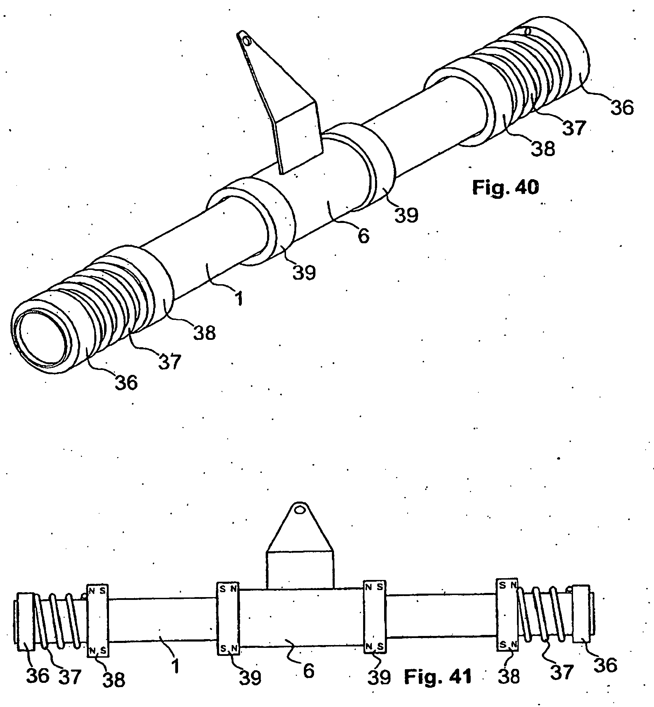

Numerous of alternative spring means can be equally adapted replacing the mechanical spring (37) or in combination with the spring (37).For example magnets (38), (39) can be provided to both ends of the moving element (6) and to the stationary elements (36) of the traverse device (1) with opposite polarity. The oppositely poled magnets (38,39) would then function as a "spring member" once these magnets approach to each other. Alternatively, a combination of a spring and magnets can be arranged for creating spring effect. Such a combination is seen in Figure 40 and 41. Magnets (38) are provided to ends of springs (37) facing to the moving element (6) having oppositely poled magnets (39) at both ends.

Another arrangement providing a spring effect may include suitably shaped members of some rubber-like material, or a pneumatic piston type member which accumulates potential energy as the moving element (6) pressures the piston and gives this energy back to the moving element (6) in opposite direction.

The spring effect may be provided by any combination of the above spring members or means.

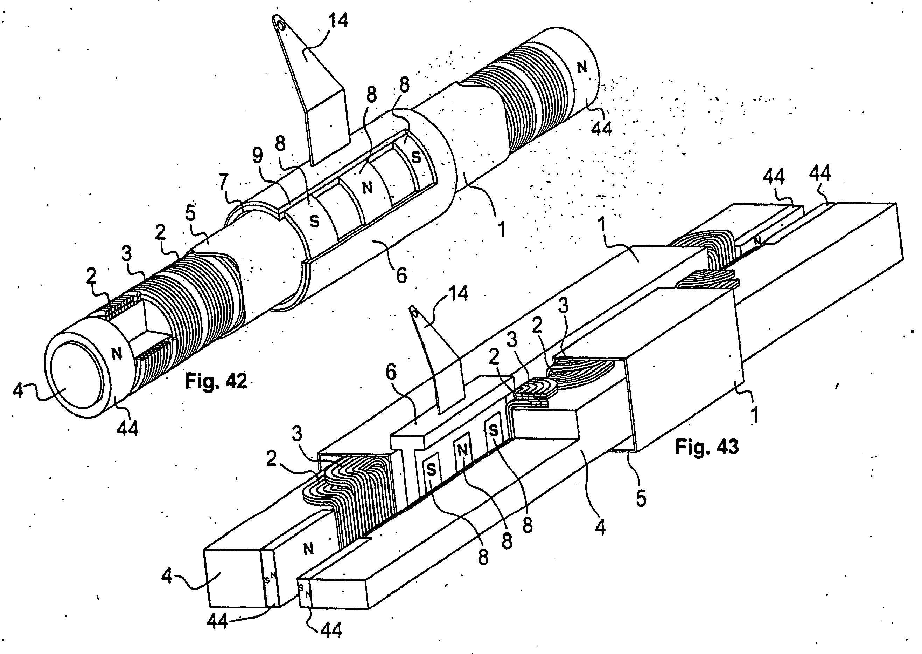

Another arrangement providing a spring effect may comprise oppositely poled magnets (44) provided on the ferromagnetic core, at the required reversing points of the moving element (6), as seen in Figure 42 and Figure 43. The oppositely poled magnets (44) are preferably arranged at ends of the core members (2,3), and have substantially similar height with those of coils members (2,3).

The coil members (2,3) require the winding of a conductor in a manner that the current flow as a loop to produce magnetic flux in the core material (4). The coil members (2,3) of a traverse device (1) are representatively shown in Figure 2, 6, and 10 as having wires wound around the core material (4).

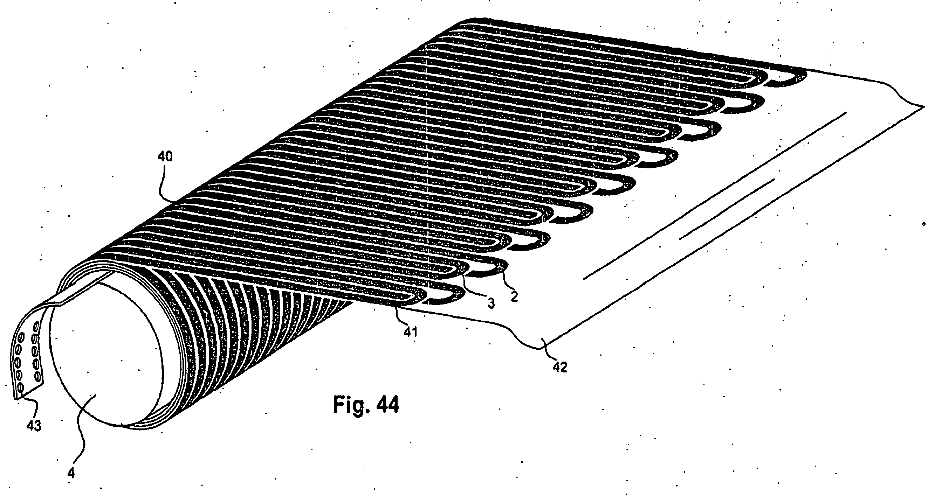

As in Figure 44, the coil members (2,3) may be of a form having multiple stripes of conductors placed between a thin foil (41) and an electrically insulating backing film layer (42). This foil (41) and backing film combination (42) is then wound on the ferromagnetic core material (4) to form a coil structure.

The foil (41) and film (42) combination (40) may be produced by a number of ways, similar to producing conventional PCBs such as chemical etching of conductor foil (41) which is already laminated on the electrically insulating backing film layers (42). Both ends of the coil members (2,3) are connected to each other as required to provide the necessary current flow and energizing them through terminals (43).

## Claims

1. A traverse device which may be suitably used on yarn winding machines, or other machines in which traverse mechanisms are useful, comprising a longitudinally extending stator having a ferromagnetic core material (4) provided with coil members (2,3); a moving element (6) having permanent magnets (8) forced by the coil members (2,3) and moved along the longitudinal direction of the stator, **characterized in that** the moving element (6) is co-axially and outwardly or radially outwardly mounted on the coil members (2,3) which surround the ferromagnetic core material (4); each coil member (2,3) comprising a number of winding units (10) in a manner that the current to flow in clockwise direction while in the next winding of the same phase to flow in counterclockwise; and winding units (10) of each coil member (2,3) being spaced apart from one another allowing the winding units of the other coil member can be placed within respective spaces.

2. A traverse device as in claim 1 , **characterized in that** the moving element (6) has a hollow cylindrical or polygonal sectional form essentially comprises a sliding bearing element (7), carrying a number of permanent magnets (8) which are positioned one next to another, and a bushing (9) covering the magnets (8).

3. A traverse device as in claim 1, **characterized in that** a first coil member is energized in phase A (11) and a second coil member is energized in phase B (12) such a mannerthat the current flows alternating with 90 degrees of phase shift.

4. A traverse device as in claim 1, **characterized in that** when the moving element (6) is in cylindrical form, each magnet (8), having ring or arc segment-shape, is oppositely poled in radial direction; and radial polarity of each magnet (8) is reversed with respect to the next one; and when the moving element (6) is in a polygonal form, each magnet (8) is oppositely poled from inwards to outwards, and the polarity is reversed with respect to the next one along the axis.

5. A traverse device which may be suitably used on yarn winding machines, or other machines in which traverse mechanisms are useful, comprising two longitudinally extending stators having a ferromagnetic core material (4) provided with coil members (2,3); a moving element (6) having permanent magnets (8) forced by the coil members (2,3) and moved along the longitudinal direction of the stator, **characterized in that** the moving element (6) is provided between the two stators having the coil members (2,3) which surround the ferromagnetic core material (4); each coil member (2,3) comprising a number of winding units (10) in a manner that the current to flow in clockwise direction while in the next winding of the same phase to flow in counterclockwise; and winding units (10) of each coil member (2,3) being spaced apart from one another allowing the winding units of the other coil member can be placed within respective spaces.

6. A traverse device which may be suitably used on yarn winding machines, or other machines in which traverse mechanisms are useful, comprising two longitudinally extending stators having a ferromagnetic core material (4) provided with coil members (2,3); a moving element (6) having permanent magnets (8) forced by the coil members (2,3) and moved along the longitudinal direction of the stator, **characterized in that** the moving element (6) is provided between the two stators having the coil members (2,3) provided on the ferromagnetic core material (4) in a manner that windings of coil members (2,3) face essentially to the moving element (6); each coil member (2,3) comprising a number of winding units (10) in a manner that the current to flow in clockwise direction while in the next winding of the same phase to flow in counterclockwise; and winding units (0) of each coil member being spaced apart from one another allowing the winding units of the other coil member, can be placed within respective spaces; and the core materials (4) being optionally mounted or connected to each other by a ferromagnetic base (16), which together define a C-like shape.

7. A traverse device as in anyone of claims 1, 5 or 6, **characterized in that** the core material (4), the coil members (2,3) are of a polygonal form, in particular rectangular/square parallelepiped form.

8. A traverse device as in claim 6 or 7, **characterized in that** a first coil member of the first stator is energized for phase A (11) and a second coil member of the first stator is energized for phase B (12), and a first coil member of the second stator is energized for phase A (11) and a second coil member of the second stator is energized for phase B (12) such a manner that the current flows alternating with 90 degrees of phase shift.

9. A traverse device as in claim 6 or 7, **characterized in that** each magnet (8) of the moving element (6) is oppositely poled from inwards to outwards, and the polarity is reversed with respect to the next one along the axis, **in that** the number of magnets (8) can be one with single or multiple polarities on each side, or more with single or multiple polarities on each side.

10. A traverse device as in claim 1,6 or 7, **characterized in that** magnets (39) are provided on the moving element (6) and oppositely poled magnets (38) are provided on the traverse device (1) at the required reversing points of the moving element (6).

11. A traverse device as in claim 1, 6 or 7, **characterized in that** magnets (44) are provided on the ferromagnetic core (4) provided on the traverse device (1) at the required reversing points of the moving element (6).

12. A traverse device as in claim 1,6 or 7, **characterized in that** spring members (37) are provided on the traverse device (1), at the required reversing points of the moving element (6).

13. A traverse device as in any of the preceding claims, **characterized in that** a controlled energy supplying arrangement is provided for supplying electrical current to a predetermined coil at a time, comprising high side unidirectional electronic switching elements (H1, MH2, MH3, H4, MH5,...) being driven by a high side driving circuit (19), are placed between the series connections of Individual winding members (W1,W2,W3,W4,W5 ) and the power line connected to the positive terminal of adjustable unipolar current controller (18); and low side unidirectional electronic switching elements (ML1, ML2, ML3, ML4, ML5,....). being driven by a low side driving circuit (20), are placed between the series connections of individual winding members (W1,W2,W3,W4,W5..) and the power line connected to the negative terminal of adjustable unipolar current controller (18); while the adjustable unipolar current controller (18); high side driving circuit (19) low side driving circuit (20), are controlled by controller(17)

14. A traverse device as in any of the claims 1 to 12, **characterized in that** a controlled energy supplying arrangement is provided for supplying electrical current to a predetermined coil at a time, comprising bidirectional electronic switching elements (TS1, TS2, TS3, TS4, TS5,....) being driven by circuits (23,24) are placed between the series connections of individual winding members (W1, W2, W3, W4, W5 ) and the power lines connected to the terminals adjustable bipolar current controller (22) alternately as one of them is connected to first line, the second one is connected to second line and the next one is connected to first line again; and the bidirectional electronic switching elements (TS1, TS2, TS3, TS4, TS5,....) being driven by circuits (23,24) while the adjustable bipolar current controller (22) and bidirectional electronic switching elements driving circuits (23,24) are controlled by controller(17)

15. A traverse device as in any of the claims 1 to 12, **characterized in that** a controlled energy supplying arrangement is provided for supplying electrical current to a predetermined coil at a time, comprising bidirectional electronic switching elements (TD1, TD2, TD3, TD4, TD5,....) being driven by circuits (23 ,24) are placed between the series connections of individual winding members (W1, W2, W3, W4, W5) and the power lines connected to the terminals adjustable bipolar current controller (22) alternately as two of them are connected to first line, the adjacent two of them are connected to second line and the two of them are connected to first line again; and the bidirectional electronic switching elements (TD1, TD2, TD3, TD4, TD5) being driven by circuits (23, 24) while the adjustable bipolar current controller (22) and bidirectional electronic switching elements driving circuits (23,24) are controlled by controlled 17)

## Patentansprüche

1. Traversier-Vorrichtung, welche geeignet auf Aufspulmaschinen oder anderen Maschinen, in welchen Traversier-Mechanismen verwendbar sind, verwendet werden kann, aufweisend einen sich longitudinal erstreckenden Stator mit einem ferromagnetischen Kernmaterial (4) bereitgestellt mit Spulengliedern (2, 3);
einem sich bewegenden Element (6) mit Permanentmagneten (8), welches von den Spulengliedern (2, 3) getrieben und entlang der longitudinalen Richtung des Stators bewegt wird, **dadurch gekennzeichnet, dass** das sich bewegende Element (6) koaxial und nach außen oder radial nach außen auf den Spulengliedern (2, 3) montiert ist, welche das ferromagnetische Kernmaterial (4) umgeben;
jedes Spulenglied (2, 3) eine Anzahl von Windungseinheiten (10) auf eine Weise aufweist, dass der Strom im Uhrzeigersinn fließt, während er in der nächsten Windung derselben Phase entgegen dem Uhrzeigersinn fließt;
und Windungseinheiten (10) von jedem Spulenglied (2, 3) voneinander beabstandet sind und damit den Windungseinheiten des anderen Spulenglieds zu ermöglichen, innerhalb entsprechender Abstände platziert zu werden.

2. Traversier-Vorrichtung nach Anspruch 1,
**dadurch gekennzeichnet, dass**
das sich bewegende Element (6) eine hohlzylindrische oder polygonal-sektionale Form aufweist und im Wesentlichen ein gleitendes Lagerelement (7) aufweist, welches eine Anzahl von Permanentmagneten (8), welche nebeneinander positioniert sind, und eine die Magnete (8) überdeckende Hülse (9) aufweist.

3. Traversier-Vorrichtung nach Anspruch 1,
**dadurch gekennzeichnet, dass**
ein erstes Spulenglied in einer Phase A (11) erregt wird und ein zweites Spulenglied in einer Phase B (12) erregt wird auf solche Weise, dass der Strom alternierend mit 90 Grad Phasenverschiebung fließt.

4. Traversier-Vorrichtung nach Anspruch 1,
**dadurch gekennzeichnet, dass**,
wenn das sich bewegende Element (6) eine zylindrische Form aufweist, jeder Magnet (8), welcher eine Ring- oder Bogensegment-Form aufweist, in radialer Richtung entgegengesetzt gepolt ist;
und die radiale Polarität von jedem Magnet (8) in Bezug auf den nächsten umgekehrt wird;
und, wenn das sich bewegende Element (6) eine polygonale Form aufweist, jeder Magnet (8) von innen nach außen entgegengesetzt gepolt wird, und die Polarität in Bezug auf den nächsten entlang der Achse umgekehrt wird.

5. Traversier-Vorrichtung, welche geeignet auf Aufspulmaschinen oder anderen Maschinen, in welchen Traversier-Mechanismen verwendbar sind, verwendet werden kann, aufweisend zwei sich longitudinal erstreckende Statoren mit einem ferromagnetischen Kernmaterial (4) bereitgestellt mit Spulengliedern (2, 3);
einem sich bewegenden Element (6) mit Permanentmagneten (8), welches von den Spulengliedern (2, 3) getrieben und entlang der longitudinalen Richtung des Stators bewegt wird,
**dadurch gekennzeichnet, dass**
das sich bewegende Element (6) zwischen den zwei Statoren bereitgestellt ist mit den Spulengliedern (2, 3), welche das ferromagnetische Kernmaterial (4) umgeben;
jedes Spulenglied (2, 3) eine Anzahl von Windungseinheiten (10) auf eine Weise aufweist, dass der Strom im Uhrzeigersinn fließt, während er in der nächsten Windung derselben Phase entgegen dem Uhrzeigersinn fließt;
und Windungseinheiten (10) von jedem Spulenglied (2, 3) voneinander beabstandet sind und damit den Windungseinheiten des anderen Spulenglieds zu ermöglichen, innerhalb entsprechender Abstände platziert zu werden.

6. Traversier-Vorrichtung, welche geeignet auf Aufspulmaschinen oder anderen Maschinen, in welchen Traversier-Mechanismen verwendbar sind, verwendet werden kann, aufweisend zwei sich longitudinal erstreckende Statoren mit einem ferromagnetischen Kernmaterial (4) bereitgestellt mit Spulengliedern (2, 3);
einem sich bewegenden Element (6) mit Permanentmagneten (8), welches von den Spulengliedern (2, 3) getrieben und entlang der longitudinalen Richtung des Stators bewegt wird,
**dadurch gekennzeichnet, dass**
das sich bewegende Element (6) zwischen den zwei Statoren bereitgestellt ist mit den zwei Spulengliedern (2, 3) bereitgestellt auf dem ferromagnetischen Kernmaterial (4) auf eine Weise, dass die Windungen der Spulenglieder (2, 3) im Wesentlichen dem sich bewegenden Element (6) zugewandt sind;
jedes Spulenglied (2, 3) eine Anzahl von Windungseinheiten (10) auf eine Weise aufweist, dass der Strom im Uhrzeigersinn fließt, während er in der nächsten Windung derselben Phase entgegen dem Uhrzeigersinn fließt;
und Windungseinheiten (10) von jedem Spulenglied voneinander beabstandet sind und damit den Windungseinheiten des anderen Spulengliedes ermöglicht innerhalb entsprechender Abstände platziert zu werden;
und die Kernmaterialien (4) optional miteinander montiert oder verbunden sind durch eine ferromagnetische Basis (16), welche zusammen eine C-artige Form definieren.

7. Traversier-Vorrichtung nach einem der Ansprüche 1, 5 oder 6,
**dadurch gekennzeichnet, dass**
das Kernmaterial (4), die Spulenglieder (2, 3) von einer polygonalen Form, insbesondere einer rechteckigen/quadratischen Parallelepiped-Form sind.

8. Traversier-Vorrichtung nach Anspruch 6 oder 7,
**dadurch gekennzeichnet, dass**
ein erstes Spulenglied des ersten Stators für eine Phase A (11) erregt wird und ein zweites Spulenglied des ersten Stators für eine Phase B (12) erregt wird, und
ein erstes Spulenglied des zweiten Stators für Phase A (11) und ein zweites Spulenglied des zweiten Stators für Phase B (12) auf solche Weise erregt wird, dass der Strom alternierend mit 90 Grad Phasenverschiebung fließt.

9. Traversier-Vorrichtung nach Anspruch 6 oder 7,
**dadurch gekennzeichnet, dass**
jeder Magnet (8) des sich bewegenden Elements (6) von innen nach außen entgegengesetzt gepolt ist, und die Polarität mit Bezug auf den nächsten entlang der Achse umgekehrt wird, so dass die Anzahl der Magnete (8) eine mit einzelner oder vielen Polaritäten auf jeder Seite sein kann oder mehrere mit einzelnen oder vielen Polaritäten auf jeder Seite.

10. Traversier-Vorrichtung nach einem der Ansprüche 1, 6 oder 7,
**dadurch gekennzeichnet, dass**
Magnete (39) auf dem sich bewegenden Element (6) bereitgestellt sind und entgegengesetzt gepolte Magnete (38) auf der Traversier-Vorrichtung (1) an den erforderlichen Umkehrpunkten des sich bewegenden Elements (6) bereitgestellt sind.

11. Traversier-Vorrichtung nach einem der Ansprüche 1, 6 oder 7,
**dadurch gekennzeichnet, dass**,
Magnete (44) auf dem ferromagnetischen Kern (4) bereitgestellt sind und auf der Traversier-Vorrichtung (1) bei den erforderlichen Umkehrpunkten des sich bewegenden Elements (6) bereitgestellt sind.

12. Traversier-Vorrichtung nach einem der Ansprüche 1, 6 oder 7,
**dadurch gekennzeichnet, dass** Federglieder (37) auf der Traversier-Vorrichtung (1) bei den erforderlichen Umkehrpunkten des sich bewegenden Elements (6) bereitgestellt sind.

13. Traversier-Vorrichtung nach einem der vorhergehenden Ansprüche,
**dadurch gekennzeichnet, dass**
eine gesteuerte Energieversorgungsanordnung bereitgestellt ist, um elektrischen Strom einer vorbestimmten Spule zu einer Zeit zuzuführen, aufweisend
high-side-unidirektionale elektronische Schaltelemente (MH1, MH2, MH3, HM4, MH5, ,..), welche von einer High-Side-Treiberschaltung (19) angetrieben werden, und zwischen den Serienverbindungen der individuellen Windungsglieder (W1, W2, W3, W4, W5) und der Stromleitung platziert sind, welche mit dem positiven Anschluss des einstellbaren unipolaren Stromreglers (18) verbunden ist;
und low-side-unidirektionale elektronische Schaltelemente (ML1, ML2, ML3, ML4, ML5, ...), welche von einer Low-Side-Treiberschaltung (20) angetrieben werden, welche zwischen den Serienverbindungen der individuellen Windungsglieder (W1, W2, W3, W4, W5, ...) und der Stromleitung platziert sind, welche mit dem negativen Anschluss des einstellbaren unipolaren Stromreglers (18) verbunden ist;
während der einstellbare unipolare Stromregler (18), die High-Side-Treiberschaltung (19), und die Low-Side-Treiberschaltung (20) von einem Regler (17) gesteuert werden.

14. Traversier-Vorrichtung nach einem der Ansprüche 1 bis 12,
**dadurch gekennzeichnet, dass**
eine gesteuerte Energieversorgungsanordnung bereitgestellt ist, um elektrischen Strom einer vorbestimmten Spule zu einer Zeit zuzuführen, aufweisend
bidirektionale elektronische Schaltelemente (TS1, TS2, TS3, TS4, TS5, ...), welche durch Schaltungen (23, 24) angetrieben werden, welche zwischen den Serienverbindungen der individuellen Windungsglieder (W1, W2, W3, W4, W5) und den Stromleitungen platziert sind, welche mit den Anschlüssen durch einen einstellbaren bipolaren Stromregler (22) alternierend verbunden werden, wenn einer von ihnen mit der ersten Leitung verbunden ist, der zweite mit der zweiten Leitung verbunden ist und der nächste erneut mit der ersten Leitung verbunden ist;
und den bidirektionalen elektronischen Schaltelementen (TS1, TS2, TS3, TS4, TS5, ...), welche von Schaltungen (23, 24) angetrieben werden, während der einstellbare bipolare Stromregler (22) und die bidirektionalen elektronischen Schaltelemente und die Treiberschaltungen (23, 24) von dem Regler (17) gesteuert werden.

15. Traversier-Vorrichtung nach einem der Ansprüche 1 bis 12,
**dadurch gekennzeichnet, dass**
eine gesteuerte Energieversorgungseinrichtung bereitgestellt ist, um elektrischen Strom einer vorbestimmten Spule zu einer Zeit zuzuführen, aufweisend
bidirektionale elektronische Schaltelemente (TD1, TD2, TD3, TD4, TD5, ...), welche durch Schaltungen (23, 24) angetrieben werden, welche zwischen den Serienverbindungen der individuellen Windungsglieder (W1, W2, W3, W4, W5) und den Stromleitungen platziert sind, welche mit den Anschlüssen durch einen einstellbaren bipolaren Stromregler (22) alternierend verbunden werden, wenn zwei von ihnen mit der ersten Leitung verbunden sind, die nächsten zwei von ihnen mit der zweiten Leitung verbunden sind und die zwei von ihnen erneut mit der ersten Leitung verbunden sind;
und die bidirektionalen elektronischen Schaltelemente (TD1, TD2, TD3, TD4, TD5), welche von den Schaltungen (23, 24) angetrieben werden, während der einstellbare bipolare Stromregler (22) und die bidirektionalen elektronischen Schaltelemente und die Treiberschaltungen (23, 24) von dem Regler (17) gesteuert werden.

## Revendications

1. Un dispositif de chariot qui peut être utilisé de façon adaptée sur des machines de bobinage d'un fil, ou sur d'autres machines dans lesquelles des mécanismes de chariot sont utilisés, comprenant un stator s'étendant longitudinalement ayant un matériau de noyau ferromagnétique (4) muni d'enroulements (2,3); un élément mobile (6) ayant des aimants permanents (8) entraîné par les enroulements (2,3) et déplacé suivant la direction longitudinale du stator, **caractérisé en ce que** l'élément mobile (6) est coaxiale et monté à l'extérieur ou radialement à l'extérieur sur les enroulements (2,3) qui entoure le matériau de noyau ferromagnétique (4); chaque enroulement (2,3) comprenant un certain nombre d'éléments de bobinage (10) de manière à ce que le courant circule dans le sens des aiguilles d'une montre pendant que dans le bobinage suivant de la même phase circule dans le sens inverse des aiguilles d'une montre; et les éléments de bobinage (10) de chaque enroulement (2,3) étant espacés l'un de l'autre permettant aux éléments de bobinage de l'autre enroulement d'être placé dans un espace respectif.

2. Un dispositif de chariot de la revendication 1, **caractérisé en ce que** l'élément mobile (6) a une section cylindrique ou polygonale creuse qui comprend essentiellement un élément support glissant (7) portant un certain nombre d'aimants permanents (8) qui sont positionnés les uns à côté des autres, et une douille (9) recouvrant les aimants (8).

3. Un dispositif de chariot de la revendication 1, **caractérisé en ce que** le premier enroulement est alimenté pendant la phase A (11) et un second enroulement est alimenté pendant phase B (12) de manière à ce que les courants alimentent alternativement avec 90 degrés de déphasage.

4. Un dispositif de chariot de la revendication 1, **caractérisé en ce que**, quand l'élément mobile (6) est de forme cylindrique, chaque aiment (8), ayant une forme d'anneau ou de segments d'arc, est polarisé à l'inverse dans la direction radiale; et une polarité radiale de chaque aiment (8) est inversée par rapport au suivant; et lorsque l'élément mobile (6) est de forme polygonale, chaque aiment (8) est polarisé à l'inverse de l'intérieur vers l'extérieur, et la polarité est inversée par rapport au suivant le long de l'axe.

5. Un dispositif de chariot qui peut être utilisé de façon adaptée sur des machines de bobinage d'un fil, ou sur d'autres machines dans lesquelles des mécanismes de chariot sont utilisés, comprenant deux stators s'étendant longitudinalement ayant un matériau de noyau ferromagnétique (4) muni d'enroulements (2,3); un élément mobile (6) ayant des aimants permanents (8) entraîné par les enroulements (2,3) et déplacé suivant la direction longitudinal du stator, **caractérisé en ce que** l'élément mobile (6) est placé entre les deux stators ayant les enroulements (2,3) qui entoure le matériau de noyau ferromagnétique (4); chaque enroulement (2,3) comprenant un certain nombre d'éléments de bobinage (10) de manière à ce que le courant circule dans le sens des aiguilles d'une montre pendant que dans le bobinage suivant de la même phase le courant circule dans le sens inverse des aiguilles d'une montre; et les éléments de bobinage (10) de chaque enroulement (2,3) étant espacés l'un de l'autre permettant aux éléments de bobinage de l'autre enroulement d'être placé dans des espaces respectifs.

6. Un dispositif de chariot qui peut être utilisé de façon adaptée sur des machines de bobinage d'un fil, ou sur d'autres machines dans lesquelles des mécanismes de chariot sont utilisés, comprenant deux stators s'étendant longitudinalement ayant un matériau à noyau ferromagnétique (4) fourni avec des enroulements (2,3); un élément mobile (6) ayant des aimants permanents (8) entrainé par les enroulements (2,3) et déplacé suivant la direction longitudinale du stator, **caractérisé en ce que** l'élément mobile (6) est placé entre les deux stators ayant les enroulements (2,3) positionné sur le matériau de noyau ferromagnétique (4) de manière à ce que les bobinages des enroulements (2,3) soit essentiellement en face de l'élément mobile (6); chaque enroulement (2,3) comprenant un certain nombre d'éléments de bobinage (10) de manière à ce que le courant circule dans le sens des aiguilles d'une montre pendant que dans le bobinage suivant de la même phase le courant circule dans le sens inverse des aiguilles d'une montre; et les éléments de bobinage (10) de chaque enroulement étant espacé l'un de autre permettant aux éléments de bobinage de l'autre enroulement d'être placé dans les espaces respectifs; et les matériaux de noyau (4) étant montés de façon optionnelle ou connectés à chacun des autres par un support ferromagnétique (16), qui définissent ensemble une forme de C.

7. Un dispositif de chariot selon l'un quelconque des revendications 1,5 ou 6, **caractérisé en ce que** le matériau de noyau (4), les enroulements (2,3) sont de forme polygonale, en particulier de forme parralélipédique rectangulaire/carrée.

8. Un dispositif de chariot selon la revendication 6 ou 7, **caractérisé en ce que** le premier enroulement du premier stator est alimenté pendant la phase A (11) et un second enroulement du premier stator est alimenté pendant la phase B (12), et un premier enroulement du second stator est alimenté pendant la phase A (11) et un second enroulement du second stator est alimenté pendant la phase B (12), de manière à ce que les courants alimentent alternativement avec 90 degrés de déphasage.

9. Un dispositif de chariot selon la revendication 6 ou 7, **caractérisé en ce que** chaque aiment (8) de l'élément mobile (6) est polarisé à l'inverse de l'intérieur vers l'extérieur, et la polarité est inversée par rapport au suivant le long de l'axe, et **en ce que** le nombre d'aiment (8) peut être de un avec une simple ou une multiple polarités de chaque côté, ou de plusieurs avec une simple ou une multiple polarités de chaque côté.

10. Un dispositif de chariot selon la revendication 1, 6 ou 7, **caractérisé en ce que** les aimants (39) sont rapportés sur l'élément mobile (6) et les aimants polarisé à l'inverse (38) sont rapportés sur le dispositif de chariot (1) à des points de retour souhaités de l'élément mobile (6).

11. Un dispositif de chariot selon la revendication 1, 6 ou 7, **caractérisé en ce que** les aimants (44) sont apportés sur le noyau ferromagnétique (4) rapportés sur le dispositif chariot (1) à des points de retour souhaités de l'élément mobile (6).

12. Un dispositif de chariot selon la revendication 1, 6 ou 7, **caractérisé en ce que** les éléments de rappel (37) sont rapportés sur le dispositif chariot (1), à des points de retour souhaités de l'élément mobile (6).

13. Un dispositif chariot selon l'une quelconque des revendications précédentes, **caractérisé en ce qu'**un appareil de fourniture d'énergie contrôlée, est prévu pour approvisionner en courant électrique un enroulement prédéterminé à un moment donné, comprenant des éléments de commutation électronique unidirectionnel à tension positive (H1, MH2,MH3,H4,MH5,...) pilotés par un circuit de commande à tension positive (19), qui sont positionnés entre les montages en série des bobinages unitaires (W1,W2,W3,W4,W5) et la ligne d'alimentation connectée à une borne positive d'un contrôleur de courant unipolaire ajustable (18); et des éléments de commutation électronique unidirectionnel à tension négative (ML1,ML2,ML3,ML4,ML5,...) pilotés par un circuit de commande à tension négative (20), sont placés entre les montages en série des bobinages unitaires (W1,W2,W3,W4,W5,...) et la ligne d'alimentation connectée à la borne négative du contrôleur de courant unipolaire ajustable (18) ; pendant que le contrôleur de courant unipolaire ajustable (18), le circuit de commande à tension positive (19) le circuit de commande à tension négative (20), sont contrôlés par un contrôleur (17).

14. Un dispositif chariot selon l'une quelconque des revendications 1 à 12, **caractérisé en ce qu'**un appareil de fourniture d'énergie contrôlée, est prévu pour approvisionner en courant électrique un enroulement prédéterminé à un moment donné, comprenant des éléments de commutation électroniques bidirectionnels (TS1,TS2,TS3,TS4,TS5,...) pilotés par des circuits (23,24) sont placés entre les montages en série des bobinages unitaires (W1,W2,W3,W4,W5,...) et les lignes d'alimentation connectées aux bornes d'un contrôleur de courant bipolaire ajustable (22) de manière alternative alors que l'une d'entre elles est connectée à la première ligne, la seconde est connectée à une deuxième ligne et la suivante est connectée à la première ligne de la même façon; et les éléments de commutation électroniques bidirectionnels (TS1,TS2,TS3,TS4,TS5,...) pilotés par des circuits (23,24) pendant que le contrôleur de courant bipolaire ajustable (22) et les éléments de commutation électroniques bidirectionnels pilotant les circuits (23,24) sont contrôlés par un contrôleur (17).

15. Un dispositif chariot selon l'une quelconque des revendications 1 à 12, **caractérisé en ce qu'**un appareil de fourniture d'énergie contrôlée, est prévu pour approvisionner en courant électrique un enroulement prédéterminé à un moment donné, comprenant des éléments de commutation électroniques bidirectionnels (TD1,TD2,TD3,TD4,TD5,...) pilotés par des circuits (23,24) sont placés entre les montages en série des bobinages unitaires (W1,W2,W3,W4,W5,...) et les lignes d'alimentation connectées aux bornes du contrôleur de courant bipolaire (22) de manière alternative alors que deux d'entre elles sont connectées à la première ligne, les deux autres adjacents sont connectées à une deuxième ligne et les deux d'entre elles sont connectées à la première ligne de la même façon; et les éléments de commutation électroniques bidirectionnels (TD1,TD2,TD3,TD4,TD5,...) pilotés par des circuits (23,24) pendant que le contrôleur de courant bipolaire ajustable (22) et les éléments de commutation électroniques bidirectionnels pilotant les circuits (23,24) sont contrôlés par un contrôleur (17).
